# FASCICULE DE BREVET EUROPEEN

(11) **EP 1 868 952 B1**
(45) Date de publication et mention de la délivrance du brevet: **12.11.2008**
(21) Numéro de dépôt: 06726296.4
(22) Date de dépôt: 31.03.2006
(51) Int. Cl.: C03C 13/00

(54) **LAINE MINERALE, PRODUIT ISOLANT ET PROCEDE DE FABRICATION**
MINERALWOLLE, ISOLIERPRODUKT UND HERSTELLUNGSVERFAHREN
MINERAL WOOL, INSULATING PRODUCT AND PRODUCTION METHOD

(30) Priorité: 01.04.2005 FR 0550862
(43) Date de publication de la demande: 26.12.2007
(73) Titulaire: SAINT-GOBAIN ISOVER, 92400 Courbevoie (FR)
(72) Inventeur: ESPIARD, Philippe, F-60270 Gouvieux (FR); DUPOUY, Valérie, F-60520 La Chapelle En Serval (FR)
(74) Mandataire: Teyssedre, Laurent
(86) Numéro de dépôt international: PCT/FR2006/050283
(87) Numéro de publication internationale: WO 2006/103377

(56) Documents cités:
- EP-A- 1 265 821
- FR-A- 2 797 867
- US-A- 5 968 648
- US-A1- 2004 033 747

## Description

La présente invention se rapporte au domaine des laines minérales artificielles. Elle concerne plus particulièrement les laines de verre destinées à être incorporées dans des matériaux d'isolation thermique et/ou acoustique.

Les laines minérales sont susceptibles, lorsque certains critères géométriques en terme de diamètre et/ou longueur sont respectés, de s'introduire par inhalation dans l'organisme et notamment dans les poumons, parfois jusqu'aux alvéoles pulmonaires. Pour éviter tout risque pathogène lié à une éventuelle accumulation de fibres dans l'organisme, il est apparu nécessaire de veiller à ce que les fibres présentent une faible « biopersistance », c'est-à-dire puissent être aisément et rapidement éliminées de l'organisme. La composition chimique des fibres est un paramètre majeur influençant cette capacité à être éliminées rapidement de l'organisme, car elle joue un rôle considérable sur la vitesse de dissolution des fibres en milieu physiologique. Des laines minérales présentant de fortes vitesses de dissolution en milieu physiologique (« biosolubles ») ont donc été formulées et décrites dans l'art antérieur.

La principale difficulté consiste toutefois à augmenter la vitesse de dissolution des fibres en milieu physiologique tout en conservant les bonnes propriétés d'usage du produit fini, notamment la résistance mécanique et la constance de cette résistante mécanique lors d'un vieillissement en milieu humide. Ce dernier point est particulièrement crucial et délicat, car les deux critères de résistance à l'humidité et de biosolubilité sont à de nombreux égards contradictoires puisqu'ils concernent tous les deux la capacité à se dissoudre dans un milieu majoritairement aqueux.

Les exigences en terme de résistance en milieu humide sont de plus en plus fortes dans de nombreuses applications, en particulier dans le domaine des laines de verre utilisées pour la réalisation d'éléments de construction, notamment de panneaux dits « sandwichs », dans lesquels la laine minérale constitue une âme isolante entre deux parements métalliques (par exemple en acier ou aluminium). Ces éléments de construction sont principalement utilisés pour les toits et revêtements de toit, les murs et revêtements muraux externes, et les murs, cloisons et plafonds situés à l'intérieur de l'enveloppe du bâtiment. Compte tenu des contraintes mécaniques multiples auxquelles ils peuvent être soumis, de très bonnes propriétés de résistance à la compression, à l'arrachement ou au cisaillement sont exigées. Il importe en outre que la résistance mécanique et notamment la résistance à l'arrachement de ces produits soumis à l'humidité ambiante ne s'affaiblisse pas trop fortement avec le temps. Ces différentes exigences sont en particulier spécifiées dans le projet de norme prEN 14509 « Panneaux sandwiches autoportants, isolants, double peau à parements métalliques - Produits manufacturés - Spécifications ».

La demande de brevet WO 97/21636 décrit un type de fibres minérales pour lesquelles la résistance au vieillissement en milieu humide est améliorée grâce au dépôt sur la surface des fibres d'un revêtement de phosphates ou d'hydrogénophosphates d'ammonium ou de métaux alcalins. Cette solution n'est toutefois pas exempte d'inconvénients. Il apparaît en effet que de tels composés phosphorés entraînent une diminution notable de la résistance mécanique, notamment de la résistance à la compression et à l'arrachement, des produits fibreux avant vieillissement par rapport à celle des produits non-revêtus. Il semblerait que l'acidité développée par ces composés, probablement à l'origine de l'amélioration des propriétés de vieillissement en milieu humide, soit en revanche préjudiciable à l'adhésion entre les fibres et la composition d'encollage (« liant ») à base de résine lors de l'étape de polymérisation de cette dernière.

La demande de brevet WO 01/68546 décrit une laine minérale rendue stable thermiquement par l'emploi simultané d'une composition de verre particulière et d'un composé du phosphore susceptible de réagir à partir de 100°C avec les fibres pour former un revêtement réfractaire limitant à la fois le fluage et le filtrage des fibres.

Les composés du phosphore décrits dans cette demande sont des phosphates ou polyphosphates, principalement d'ammonium ou de sodium. Ces composés, déposés avec le liant sur la surface des fibres, réagissent à partir de 100°C avec la surface des fibres en libérant des composés acides tels que l'acide phosphorique et/ou l'anhydride phosphorique, lesquels réagissent, compte tenu de la composition chimique particulière des fibres, avec les ions alcalino-terreux desdites fibres pour former à leur surface le revêtement réfractaire susmentionné

Les phosphates décrits dans la demande WO 01/68546 sont assez sensibles d'une part à l'humidité (même à l'état de polyphosphates), et d'autre part à la température. La libération de composés acides à relativement basse température semble être préjudiciable à l'adhésion entre les fibres et le liant à base de résine (cette dernière étant polymérisée en étuve à des températures d'environ 200°C), et semble être à l'origine d'une diminution des propriétés mécaniques du produit fini et surtout de la stabilité desdites propriétés mécaniques à long terme.

La présente invention a donc pour but d'obvier à ces inconvénients et d'améliorer la résistance au vieillissement en milieu humide des laines minérales solubles en milieu physiologique tout en maintenant leurs bonnes propriétés mécaniques avant vieillissement (notamment en terme de résistance à la compression et à l'arrachement).

L'invention a pour objet une laine minérale susceptible de se dissoudre en milieu physiologique comprenant des fibres dont la composition chimique comprend les constituants suivants dans les limites définies ci-après exprimées en pourcentages pondéraux :

| | |
|---|---|
| SiO₂ | 35 à 75 |
| Al₂O₃ | 0 à 12 |
| CaO | 0 à 30 |
| MgO | 0 à 20 |
| Na₂O | 0 à 20 |
| K₂O | 0 à 10 |
| B₂O₃ | 0 à 10 |
| Fe₂O₃ | 0 à 5 |
| P₂O₅ | 0 à 3, |

ladite laine minérale comprenant en outre au moins un composé du phosphore qui est une molécule dans laquelle le ou les atome(s) de phosphore est (sont) lié(s) à au moins un atome de carbone, directement ou par le biais d'un atome d'oxygène.

De préférence, chaque composé du phosphore est une molécule dans laquelle le ou les atome(s) de phosphore est (sont) lié(s) à au moins un atome de carbone, directement ou par le biais d'un atome d'oxygène.

Le composé du phosphore est déposé sur au moins une partie de la surface des fibres minérales et ne fait donc pas partie de la composition chimique de la fibre vitreuse elle-même.

Le ou chaque composé du phosphore peut être une molécule unitaire, c'est-à-dire ne contenir qu'un atome de phosphore.

Le composé du phosphore selon l'invention peut alors être caractérisé en ce que l'unique atome de phosphore n'est lié directement qu'à des atomes d'oxygène ou d'hydrogène, c'est-à-dire n'est lié à au moins un atome de carbone que par le biais d'un atome d'oxygène. Il peut s'agir à titre d'exemple d'un mono-, di- ou tri-ester phosphorique, ou d'esters phosphoniques ou phosphiniques non-substitués, les groupes carbonés de ces esters étant des composés alkyles, aryles, alcenyles, alcynyles, acyles ou hydroxyalkyles, pouvant éventuellement être de nature oligomérique ou polymérique et/ou contenir un ou plusieurs hétéroatomes choisis parmi N, O ou S.

Il peut alternativement être caractérisé en ce que l'unique atome de phosphore est lié directement à au moins un atome de carbone. Il peut s'agir d'esters ou d'acides phosphoniques ou phosphiniques au moins partiellement substitués (c'est-à-dire dans lesquels au moins un des atomes d'hydrogènes liés à l'atome de phosphore est substitué par un substituant carboné). Les différents groupes carbonés de ces composés sont des composés alkyles, aryles, alcenyles, alcynyles, acyles ou hydroxyalkyles, pouvant éventuellement être de nature oligomérique ou polymérique et/ou contenir un ou plusieurs hétéroatomes choisis parmi N, O ou S.

Le ou chaque composé du phosphore selon l'invention est toutefois de préférence une molécule constituée de plusieurs composés unitaires tels que décrits précédemment, identiques ou différents, liés entre eux par des liaisons covalentes. Le composé du phosphore est alors de préférence une molécule oligomère ou polymère, c'est-à-dire que sa structure peut se représenter comme la répétition de motifs constitutifs. Le nombre de ces motifs constitutifs est avantageusement compris entre 2 et 100, notamment 2 et 50, voire entre 2 et 10. Dans le cas d'une molécule contenant plusieurs atomes de phosphore, la condition essentielle selon laquelle les atomes de phosphore sont liés à un atome de carbone doit se comprendre comme signifiant que la grande majorité des atomes de phosphore respectent cette condition, étant entendu que dans une grande molécule, le fait qu'une petite fraction des atomes de phosphore ne respectent pas cette condition n'est pas à même de modifier substantiellement la manière dont le problème technique est résolu.

Il peut ainsi être un composé dans lequel la majorité (voire la totalité) des atomes de phosphore sont liés entre eux par un atome d'oxygène, par exemple des composés du type polyester phosphorique ou phosphonique.

Il est cependant plus avantageux que la majorité (voire la totalité) des atomes de phosphore soient liés entre eux par l'intermédiaire d'une entité carbonée. Le composé du phosphore contient alors de préférence une majorité d'atomes de phosphore liés entre eux par un groupe comprenant au moins un atome de carbone, ce dernier pouvant être lié directement ou par le biais d'un atome d'oxygène à au moins un des atomes de phosphore. Un tel composé préféré peut être représenté selon la formule générale (1) suivante : 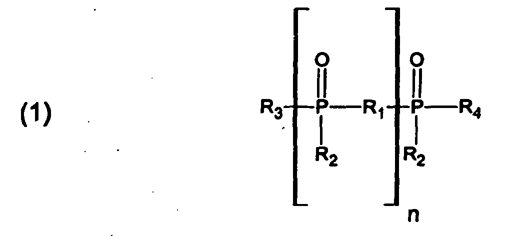 où
- n est compris entre 1 et 100, de préférence entre 1 et 50, notamment entre 2 et 10,
- les substituants R₁ à R₄ sont des entités majoritairement carbonées identiques ou différentes, de préférence du type alkyle, aryle, alcenyle, alcynyle, acyle ou hydroxyalkyle éventuellement ramifiés, pouvant éventuellement être de nature oligomérique ou polymérique et/ou contenir un ou plusieurs hétéroatomes choisis parmi N, O, S ou P. Il est préférable qu'au moins un de ces substituants, notamment le substituant R₁, contienne un atome d'oxygène lié à l'atome de phosphore de la chaîne principale.

Dans le cas où deux des substituants contiennent un atome d'oxygène lié à l'atome de phosphore de la chaîne principale, le composé du phosphore est avantageusement un oligomère ou un polymère du type polyester phosphonique de formule générale (2) suivante :

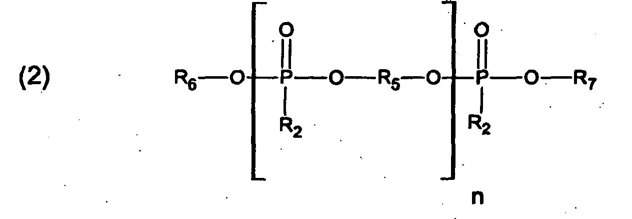

Lorsque tous les substituants contiennent un atome d'oxygène lié à l'atome de phosphore de la chaîne principale, une autre famille de composés du phosphore préférés est constituée par les polymères ou oligomères du type polyacide ou polyester phosphorique de formule générale (3) suivante :

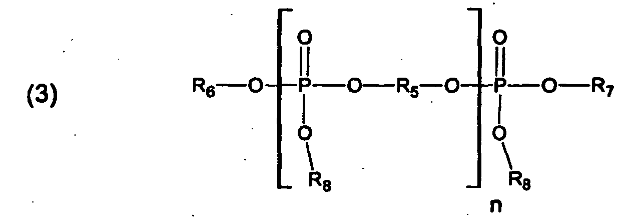

Pour ces deux derniers types de composés :
- la longueur n de la chaîne est comprise entre 1 et 100, de préférence entre 1 et 50, notamment entre 2 et 10.
- les substituants R₂ et R₅ à R₈ sont des entités majoritairement carbonées identiques ou différentes, de préférence du type alkyle, aryle, alcenyle, alcynyle, acyle ou hydroxyalkyle éventuellement ramifiés, pouvant éventuellement être de nature oligomérique ou polymérique et/ou contenir un ou plusieurs hétéroatomes choisis parmi N, O, S ou P. Le nombre d'atomes de carbone dans chaque substituant est avantageusement compris entre 1 et 15, notamment entre 2 et 10. Un grand nombre d'atomes de carbone a en effet pour inconvénient de générer une grande quantité de résidus carbonés lors d'une montée en température, tandis qu'un nombre d'atomes de carbone trop faible peut entraîner une hydrolyse trop aisée. Les substituants R₆ à R₈ peuvent également être des atomes d'hydrogène ou une base de neutralisation de l'acide phosphorique.

Lorsque la longueur n de la chaîne est égale à 1, il est possible que les groupes R₅ et R₆ soient liés entre eux de manière covalente, formant ainsi une molécule cyclique. Lorsque n est supérieur à 1, certains groupes R₅, R₆ ou R₇ peuvent être liés entre eux de manière covalente. Un composé du phosphore préféré est ainsi le produit commercialisé sous la marque AMGARD® CT ou CU par la société Rhodia. Il s'agit d'un mélange des deux esters phosphoniques cycliques de numéros CAS respectifs 41203-81-0 et 42595-45-9. Le premier d'entre eux est un ester phosphonique selon la formule (2) avec n = 1, tous les groupes R₂ et R₇ étant des groupes méthyle, les groupes R₅ et R₆ étant liés entre eux pour former un groupe alkyle unique possédant 6 atomes de carbone. Le second est un ester du même type, avec toutefois n = 2, tous les groupes R₂ étant des groupes méthyle, les 2 groupes R₅ étant respectivement liés aux groupes R₆ et R₇ pour former deux groupes alkyles en C₆.

Les composés oligomériques ou polymériques du phosphore, présentés jusqu'ici sous forme de chaînes linéaires ou cycliques, peuvent également être des réseaux réticulés, les différents substituants majoritairement carbonés pouvant être eux même liés à au moins un autre atome de phosphore, par exemple lorsque ces substituants sont des polyols ou des polyacides.

Ces derniers composés peuvent être en particulier être obtenus par des réactions d'estérification ou de transestérification entre des acides ou esters respectivement phosphoniques et phosphoriques et des polyols (en particulier diols), des polyacides (en particulier diacides) ou encore des composés époxy. Dans ce cadre, la mélasse (sous-produit du raffinage du sucre) est une source de polyols ou diols particulièrement attractive de par son faible coût. Il est apparu que des composés du phosphore selon l'invention pouvaient être obtenus par réaction entre de la mélasse et des acides ou esters phosphoriques ou phosphoniques, cette réaction pouvant même se produire par pulvérisation simultanée des deux produits sur les fibres. Des amidons phosphorés peuvent également être employés.

La laine minérale selon l'invention peut avantageusement comprendre un mélange de plusieurs composés du phosphore tels que décrits précédemment.

Le point commun à ces composés que l'on pourrait qualifier de « composés organophosphorés » est la présence de composés carbonés au sein même de la chaîne phosphorée. En comparaison avec les composés phosphorés décrits dans l'art antérieur, qui ne contiennent pas de composés carbonés liés à eux, il semblerait, sans vouloir être lié par une quelconque théorie scientifique, que la fonction de tampon acide des composés selon l'invention se manifeste de façon plus diffuse dans le temps et dégrade beaucoup moins l'adhésion entre les fibres et le liant à base de résine lors de la cuisson de cette dernière. On expliquerait ainsi les meilleures propriétés mécaniques avant vieillissement obtenues dans le cadre de la présente invention.

Le composé du phosphore selon l'invention est présent de préférence dans une teneur supérieure ou égale à 0,05%, notamment 0,1 % et inférieure ou égale à 5%, notamment 3%. Cette quantité correspond à la masse de composés du phosphore ramenée à la masse totale des fibres.

Compte tenu de la masse de phosphore dans ce type de composés, la teneur massique en atomes de phosphore ramenée à la masse des fibres est avantageusement comprise entre 0,0005% à 1 %, notamment supérieure ou égale à 0,01% et même 0,1% et inférieure ou égale à 0,5%.

Les composés du phosphore décrits présentant l'inconvénient d'être hydrophiles, il peut être avantageux d'ajouter des agents hydrofugeants à ces composés ou avec la composition d'encollage afin de limiter la prise d'eau du produit final. Les agents hydrofugeants du type silicones (polysiloxanes) sont particulièrement appréciés. La teneur ajoutée est de préférence comprise entre 0,01% et 1%, notamment entre 0,05 et 0,2% en poids.

Une composition de fibres particulièrement préférée dans le cadre de la présente invention comprend les constituants suivants dans les limites définies ci-après exprimées en pourcentages pondéraux :

| | |
|---|---|
| SiO₂ | 45 à 75 |
| Al₂O₃ | 0 à 10 |
| CaO | 0 à 15 |
| MgO | 0 à 15 |
| Na₂O | 12 à 20 |
| K₂O | 0 à 10 |
| B₂O₃ | 0 à 10 |
| Fe₂O₃ | 0 à 5, |
| P₂O₅ | 0 à 3, |

La silice (SiO₂) est un élément formateur du réseau vitreux. Une trop forte teneur rend la viscosité du verre trop élevée pour qu'il puisse être fondu, homogénéisé et affiné convenablement, tandis qu'une trop faible teneur rend le verre instable thermiquement (il dévitrifie trop aisément au refroidissement) et chimiquement (trop attaquable par l'humidité). La teneur en silice est avantageusement supérieure ou égale à 50%, voire 55% et même 60% et inférieure ou égale à 70%.

L'alumine (Al₂O₃) est également un élément formateur de réseau, susceptible d'augmenter significativement la viscosité du verre. Présent en de trop fortes teneurs, il a également un impact négatif sur la solubilité dans le fluide des alvéoles pulmonaires. Lorsque sa teneur est faible, la résistance à l'humidité est fortement diminuée. Pour ces différentes raisons, la teneur en alumine est avantageusement supérieure ou égale à 1% et inférieure ou égale à 5%, notamment 3%.

Les oxydes alcalino-terreux, principalement la chaux (CaO) et la magnésie (MgO) permettent de diminuer la viscosité du verre à haute température et facilitent ainsi les étapes d'élaboration d'un verre exempt d'inclusions gazeuses ou solides. En substitution par rapport aux oxydes alcalins, ils améliorent nettement la résistance du verre à l'humidité, mais en revanche favorisent la dévitrification, rendant difficile les étapes de fibrage. La teneur en oxyde de calcium est donc avantageusement supérieure ou égale à 5%, notamment 7%, et inférieure ou égale à 10%. La teneur en magnésie est quant à elle de préférence inférieure ou égale à 10% et même, à 5%, et supérieure ou égale à 1%, voire 2%. D'autres oxydes alcalino-terreux tels que l'oxyde de baryum (BaO) ou de strontium (SrO) peuvent également être présents dans les laines minérales selon l'invention. Compte tenu de leur coût élevé, ils sont toutefois avantageusement présents en des quantités nulles (à l'exception de traces provenant d'impuretés inévitables des matières premières).

Les oxydes alcalins, principalement les oxydes de sodium (Na₂O) et de potassium (K₂O), sont particulièrement utiles pour diminuer la viscosité du verre à haute température et augmenter la résistance à la dévitrification. Ils se révèlent toutefois néfastes à la résistance au vieillissement en milieu humide. La teneur en oxyde de sodium est par conséquent de préférence inférieure ou égale à 18% et supérieure ou égale à 14%. La teneur en oxyde de potassium est avantageusement inférieure ou égale à 5%, voire 2% et même 1%, principalement pour des raisons liées à la disponibilité des matières premières.

L'oxyde de bore (B₂O₃) est intéressant pour diminuer la viscosité du verre et améliorer la biosolubilité des fibres. Sa présence tend en outre à améliorer les propriétés d'isolation thermique de la laine minérale, notamment en abaissant son coefficient de conductivité thermique dans sa composante radiative. En outre, compte tenu de son coût élevé et de son aptitude à se volatiliser à haute température, engendrant des émanations nocives et obligeant les sites de production à s'équiper en installations de retraitement des fumées, la teneur en oxyde de bore est de préférence inférieure ou égale à 8%, notamment à 6%, et même à 5%. Une teneur nulle est préférée dans certains modes de réalisation.

L'oxyde de fer est limité à une teneur inférieure à 5% du fait de son rôle sur la coloration du verre, mais également sur la faculté du verre à dévitrifier. Une teneur en fer élevée permet de conférer une résistance à très haute température aux laines minérales du type « laine de roche », mais rend le fibrage par la technique de centrifugation interne difficile voire impossible dans certains cas. La teneur en oxyde de fer est de préférence inférieure ou égale à 3% et même à 1 %.

L'oxyde de phosphore (P₂O₅) peut être avantageusement utilisé, notamment du fait de son rôle bénéfique sur la biosolubilité.

Les fibres selon l'invention peuvent également contenir d'autres oxydes, en une teneur massique ne dépassant généralement pas 3%, voire 2% et même 1 %. Parmi ces oxydes figurent les impuretés communément apportées par les matières premières naturelles ou artificielles (par exemple le verre recyclé, appelé calcin) utilisées dans ce type d'industrie (parmi les plus courantes figurent TiO₂, MnO, BaO...). Des impuretés telles que ZrO₂ sont également couramment apportées par la dissolution partielle dans le verre d'éléments chimiques provenant des matériaux réfractaires servant à la construction des fours. Certaines traces proviennent encore des composés employés pour l'affinage du verre : on citera en particulier l'oxyde de soufre SO₃ très couramment employé. Des oxydes alcalino-terreux tels que BaO, SrO, et/ou alcalins tels que Li₂O peuvent être volontairement inclus dans les fibres selon l'invention. Compte tenu de leur coût, il est toutefois préférable que les fibres selon l'invention n'en contiennent pas. Ces divers oxydes, du fait de leur faible teneur, ne jouent en tout état de cause aucun rôle fonctionnel particulier pouvant modifier la manière dont les fibres selon l'invention répondent au problème posé.

L'invention a aussi pour objet un procédé d'obtention des laines minérales selon l'invention, comprenant une étape de formage des fibres puis une étape d'apport, notamment par pulvérisation ou imprégnation d'une solution; d'au moins un composé du phosphore sur la surface desdites fibres.

L'invention a également pour objet des produits d'isolation thermique et/ou acoustique comprenant au moins une laine minérale selon l'invention, en particulier des éléments de construction du type « sandwich », dans lesquels la laine minérale constitue une âme isolante entre deux parements métalliques (par exemple en acier ou aluminium), ces éléments éventuellement autoportants servant à la construction de parois internes ou externes, de toits ou de plafonds.

La densité des produits d'isolation selon l'invention est de préférence comprise entre 40 et 150kg/m³ (cette densité ne prenant en compte que la laine minérale).

L'invention a enfin pour objet l'utilisation d'au moins une molécule dans laquelle le ou les atome(s) de phosphore est (sont) lié(s) à au moins un atome de carbone, directement ou par le biais d'un atome d'oxygène pour améliorer les propriétés mécaniques après vieillissement en milieu humide des laines minérales comprenant des fibres dont la composition chimique comprend les constituants suivants dans les limites définies ci-après exprimées en pourcentages pondéraux:

| | |
|---|---|
| SiO₂ | 35 à 75 |
| Al₂O₃ | 0 à 12 |
| CaO | 0 à 30 |
| MgO | 0 à 20 |
| Na₂O | 0 à 20 |
| K₂O | 0 à 10 |
| B₂O₃ | 0 à 10 |
| Fe₂O₃ | 0 à 5 |
| P₂O₅ | 0 à 3. |

Les avantages présentés par les fibres de verre selon l'invention seront mieux appréciés à travers les exemples suivants, illustrant la présente invention sans toutefois la limiter.

Une masse de verre fondu dont la composition chimique (exprimée en pourcentages massiques) est présentée dans le tableau 1, est obtenu par un procédé de fusion de matières premières vitrifiables mettant en oeuvre comme source principale d'énergie des électrodes plongées dans le bain de verre.

**Tableau 1**

| Oxyde | % pds |
|---|---|
| SiO₂ | 65 |
| Al₂O₃ | 2 |
| Na₂O | 16 |
| K₂O | 0.8 |
| CaO | 8 |
| MgO | 2.8 |
| B₂O₃ | 4.5 |
| Fe₂O₃ | 0.2 |
| Impuretés | 0.7 |

Cette masse de verre fondu est ensuite transformée en fibres par un procédé de centrifugation interne, mettant en oeuvre une assiette de centrifugation comprenant un panier formant chambre de réception du verre fondu et une bande périphérique percée d'une multitude d'orifices. L'assiette étant mue d'un mouvement de rotation autour d'un axe vertical, le verre fondu est éjecté sous l'action d'une force centrifuge et la matière s'échappant des orifices est étirée en filaments avec l'assistance d'un courant de gaz d'étirage.

Une couronne de pulvérisation d'encollage est disposée au-dessous des assiettes de centrifugation de façon à répartir régulièrement la composition d'encollage sur la laine de verre qui vient d'être formée. La composition d'encollage est principalement à base de résine formo-phénolique et d'urée, diluées dans de l'eau avant pulvérisation sur les fibres. D'autres types de composition d'encollage, en particulier exemptes de formaldéhyde, peuvent bien entendu être également employées, seules ou en mélange. Il peut s'agir par exemple :
- de compositions à base de résine époxy du type éther glycidique et d'un durcisseur aminé non volatil (décrites dans la demande EP-A-0 369 848), pouvant également comprendre un accélérateur choisi parmi les imidazoles, les imidazolines et leurs mélanges,
- de compositions comprenant un polyacide carboxylique et un polyol, de préférence associé à un catalyseur du type sel de métal alcalin d'acide organique phosphoré (décrites dans la demande EP-A- 0 990 727),
- de compositions comprenant un ou plusieurs composés renfermant une fonction carboxylique et/ou une fonction β-hydroxyalkylamide (décrites dans la demande WO-A-93/36368),
- de compositions renfermant soit un acide carboxylique et une alcanolamine, soit une résine préalablement synthétisée à partir d'un acide carboxylique et d'une alcanolamine, et un polymère contenant un groupe carboxylique (décrites dans la demande EP-A-1 164 163),
- de compositions d'encollages préparées en deux étapes consistant à mélanger un anhydride et une amine dans des conditions réactives jusqu'à ce que l'anhydride soit substantiellement solubilisé dans l'amine et/ou ait réagi avec elle, puis à ajouter de l'eau et terminer la réaction (décrites dans la demande EP-A-1 170 265),
- de compositions contenant une résine qui comprend le produit de réaction non polymérique d'une amine avec un premier anhydride et un deuxième anhydride différent du premier (décrites dans la demande EP-A-1 086 932),
- de compositions contenant au moins un polyacide carboxylique et au moins une polyamine,
- de compositions comprenant des copolymères d'acide carboxylique et de monomères contenant des fonctions alcool telles que décrites dans la demande US 2005/038193,
- de compositions comprenant des polyols et des polyacides ou polyanhydridres tels que l'acide maléique, décrites par exemple dans la demande WO 2005/87837 ou dans le brevet US 6706808.

Ces demandes ou brevets EP-A-0 369 848, EP-A- 0 990 727, WO-A-93/36368, EP-A-1 164 163, EP-A-1 170 265, EP-A-1 086 932, US 2005/038193, WO 2005/87837, US 6706808 décrivent des compositions connues dans l'art antérieur, ainsi que les demandes WO 04/007395, WO 2005/044750, WO 2005/121191, WO 04/094714, WO 04/011519, US 2003/224119, US 2003/224120.

Des résines du type aminoplaste (mélamine-formol ou urée-formol) peuvent également être employées dans le cadre de l'invention.

Le composé du phosphore est ajouté à la composition d'encollage, mais il peut également être pulvérisé indépendamment, à l'aide d'une seconde couronne de pulvérisation. Les différents composés du phosphore employés sont les suivants :
- l'exemple comparatif A ne comprend pas de composé du phosphore.
- le dihydrogénophosphate d'ammonium, en une teneur de 0,5% pour l'exemple comparatif B1 et 1% pour l'exemple comparatif B2. L'usage de ce composé du phosphore pour améliorer la résistance au vieillissement des fibres minérales est notamment décrit dans la demande WO 97/21636 susmentionnée.
- l'agent ignifuge de nom commercial « Exolit OP 550 » et produit par la société Clariant GmbH. A base d'oligomère du type polyester phosphorique, il est surtout employé comme agent de protection des polyuréthanes contre le feu. Les exemples selon l'invention C1 et C2 en contiennent respectivement 1 et 3% par rapport à la masse totale des fibres.
- l'agent ignifuge de nom commercial « Fyrol PNX » commercialisé par la société Akzo Nobel, contenant 19% de P₂O₅. Il s'agit d'un oligomère du type polyester phosphorique de formule (3) dans laquelle n varie entre 2 et 20, R₆, R₇ et R₈ sont des groupes éthyle, et R₅ est un groupe éthylène (numéro CAS 184538-58-7). L'exemple selon l'invention D en contient 1 %.
- le phosphonoacétate de triéthyle (TEPA, CAS n° 867-13-0), employé habituellement comme intermédiaire réactionnel. L'exemple selon l'invention E en contient 1,5%.

Parmi d'autres exemples de composés du phosphore selon l'invention figurent les produits Budit 341 ou 3118F commercialisés par la société Buddenheim. Le mélange d'esters phosphoniques cycliques commercialisé sous la marque AMGARD® CT et CU par la société Rhodia est également particulièrement intéressant. Ce produit, utilisé comme retardateur de feu pour les textiles à base de polyester, présente en effet une stabilité plus élevée que le produit Exolit OP 550 à la température de l'étuve, et permet ainsi d'obtenir de meilleures propriétés mécaniques avant vieillissement. Sa teneur en P₂O₅ est d'environ 20%.

La laine minérale ainsi encollée est collectée sur un convoyeur à bande équipé de caissons d'aspiration internes qui permettent de retenir la laine minérale sous forme d'un feutre ou d'une nappe à la surface du convoyeur. Le convoyeur circule ensuite dans une étuve où a lieu la polycondensation de la résine de l'encollage. Le produit isolant fabriqué est un panneau d'une densité de l'ordre de 80kg/m³.

Les tests mécaniques suivants sont entrepris dès la fin de la fabrication du produit, avant tout test de vieillissement :
- Test de résistance à la compression :
   Le test de résistance en compression, effectué selon la norme NF EN 826, consiste à appliquer une contrainte en compression à l'aide d'une machine de force sur un échantillon de surface 200*200mm². La résistance à la compression est donnée par la pression (en kPa) correspondant à une déformation de 10%.

### - Test de résistance à l'arrachement :

Le test de résistance à l'arrachement est effectué selon les principes de la norme NF EN 1607. Il consiste à soumettre un échantillon de surface 200*200mm² collé entre deux plaques de bois à une contrainte en traction selon un axe perpendiculaire à la surface des plaques jusqu'à la rupture de l'échantillon.

Le tableau 2 regroupe les résultats de ces différents tests, les résistances initiales (c'est-à-dire avant vieillissement en milieu humide) à la compression et à l'arrachement étant exprimées en pourcentages par rapport au niveau de référence de l'échantillon comparatif A, pris arbitrairement à 100%.

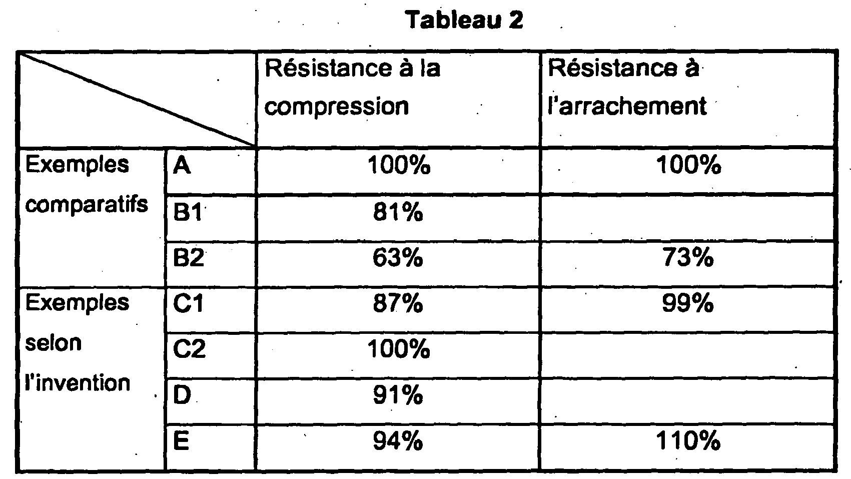

Ces résultats montrent clairement que l'ajout de phosphates minéraux connus de l'art antérieur dégrade fortement les propriétés de résistance à la compression et à l'arrachement de laines minérales, ce d'autant plus que la teneur en de tels phosphates est importante.

L'ajout de composés du phosphore selon l'invention permet en revanche de minimiser les pertes de résistance mécanique initiale par rapport aux produits non-revêtus, voire même étonnamment d'améliorer leur résistance initiale à l'arrachement (Ex. E).

Des panneaux sandwich comprenant une laine minérale dont la composition correspond aux exemples précédemment décrits A (comparatif), B1 (comparatif), C1, C2 et D ont été soumis au test de résistance à l'arrachement après vieillissement en milieu humide décrit dans le projet de norme prEN 14509 « Panneaux sandwiches autoportants, isolants, double peau à parements métalliques - Produits manufacturés - Spécifications ». Les panneaux sandwich sont placés pendant 28 jours dans un caisson climatique à 65°C et 100% d'humidité relative, la perte de résistance à l'arrachement après vieillissement ne devant pas excéder 60%. Le tableau 3 décrit les résultats, exprimés en terme de perte (en pourcents) de la résistance à l'arrachement.

**Tableau 3**

| Référence | Perte après vieillissement (%) |
|---|---|
| A | 80-85% |
| B1 | 65% |
| C1 | 44% |
| C2 | 20% |
| D | <40% |

Deux laines minérales, l'une selon l'exemple C1, l'autre selon le même exemple, mais dans laquelle un silicone a été ajouté, en l'occurrence une solution aqueuse de polydiméthylsiloxane commercialisé sous la marque Dow Corning® 1581 à hauteur de 0,1% en poids, ont été soumises à des tests d'immersion partielle dans l'eau selon la norme NF EN 1609.

En l'absence de silicone, la prise d'eau est de 1,47 kg/m², tandis qu'elle chute à 0,4 kg/m² en présence de silicone. Les résultats de résistance à la compression et à l'arrachement (avant et après vieillissement en milieu humide) ne sont en revanche pas affectés par la présence de silicones.

L'utilisation des laines minérales selon l'invention permet donc d'obtenir d'excellents résultats en terme de vieillissement. L'amélioration par rapport aux laines minérales exemptes de composés du phosphore est spectaculaire, tandis que l'on observe également une nette amélioration par rapport aux laines minérales revêtues de composés du phosphore minéraux connus de l'art antérieur.

## Revendications

1. Laine minérale susceptible de se dissoudre en milieu physiologique comprenant des fibres dont la composition chimique comprend les constituants suivants dans les limites définies ci-après exprimées en pourcentages pondéraux:
| | |
|---|---|
| SiO₂ | 35 à 75 |
| A₂O₃ | 0 à 12 |
| CaO | 0 à 30 |
| MgO | 0 à 20 |
| Na₂O | 0 à 20 |
| K₂O | 0 à 10 |
| B₂O₃ | 0 à 10 |
| Fe₂O3 | 0 à 5 |
| P₂O₅ | 0 à 3, |
ladite laine minérale comprenant en outre au moins un composé du phosphore, **caractérisée en ce qu'**un composé du phosphore est une molécule dans laquelle le ou les atome(s) de phosphore est (sont) lié(s) à au moins un atome de carbone, directement ou par le biais d'un atome d'oxygène.

2. Laine minérale selon la revendication 1, comprenant au moins un composé du phosphore choisi parmi :
a) une molécule contenant un unique atome de phosphore lié à au moins un atome de carbone, uniquement par le biais d'un atome d'oxygène.
b) une molécule contenant un unique atome de phosphore lié directement à au moins un atome de carbone.

3. Laine minérale selon la revendication précédente, comprenant au moins un composé du phosphore (a) choisi parmi : un mono-, di- ou tri-ester phosphorique, ou un ester phosphonique ou phosphinique non-substitué, les groupes carbonés de ces esters étant des composés alkyles, aryles, alcenyle, alcynyle, acyles ou hydroxyalkyles, pouvant éventuellement être de nature oligomérique ou polymérique et/ou contenir un ou plusieurs hétéroatomes choisis parmi N, O ou S.

4. Laine minérale selon la revendication 2, comprenant au moins un composé du phosphore (b) choisi parmi un ester ou un acide phosphonique ou phosphinique au moins partiellement substitué, les différents groupes carbonés de ces composés étant des composés alkyles, aryles, alcenyle, alcynyle, acyles ou hydroxyalkyles, pouvant éventuellement être de nature oligomérique ou polymérique et/ou contenir un ou plusieurs hétéroatomes choisis parmi N, O ou S.

5. Laine minérale selon la revendication 1, comprenant au moins un composé du phosphore qui est une molécule constituée de plusieurs composés de type (a) ou (b) selon les revendications 2 à 4, identiques ou différents, liés entre eux par des liaisons covalentes.

6. Laine minérale selon la revendication précédente, comprenant au moins un composé du phosphore qui est une molécule oligomère ou polymère, dont le nombre de motifs constitutifs est préférentiellement compris entre 2 et 100, notamment 2 et 50, voire entre 2 et 10.

7. Laine minérale selon la revendication 5 ou 6, comprenant au moins un composé du phosphore qui contient une majorité d'atomes de phosphore liés entre eux par l'intermédiaire d'une entité carbonée.

8. Laine minérale selon la revendication précédente, comprenant au moins un composé du phosphore qui peut être représenté selon la formule générale (1) suivante: 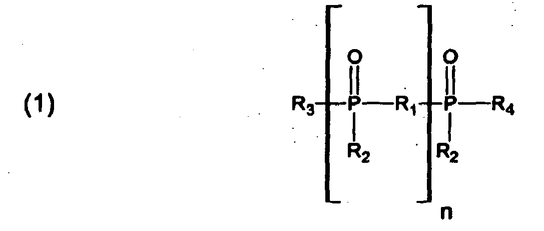 dans laquelle :
- n est compris entre 1 et 100, de préférence entre 1 et 50, notamment entre 2 et 10,
- les substituants R₁ à R₄ sont des entités majoritairement carbonées identiques ou différentes, de préférence du type alkyle, aryle, alcenyle, alcynyle, acyle ou hydroxyalkyle éventuellement ramifiés, pouvant éventuellement être de nature oligomérique ou polymérique et/ou contenir un ou plusieurs hétéroatomes choisis parmi N, O, S ou P.

9. Laine minérale selon la revendication précédente, comprenant au moins un composé du phosphore qui est un oligomère ou un polymère du type polyester phosphonique de formule générale (2) suivante : 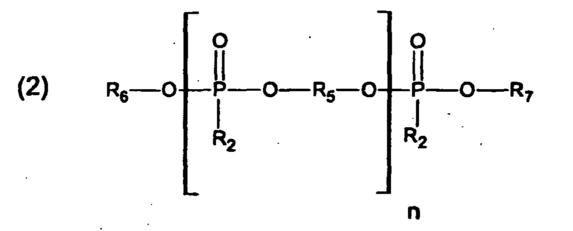 dans lequel :
- la longueur n de la chaîne est comprise entre 1 et 100, de préférence entre 1 et 50, notamment entre 2 et 10.
- les substituants R₂ et R₅ à R₇ sont des entités majoritairement carbonées identiques ou différentes, de préférence du type alkyle, aryle, alcenyle, alcynyle, acyle ou hydroxyalkyle éventuellement ramifiés, pouvant éventuellement être de nature oligomérique ou polymérique et/ou contenir un ou plusieurs hétéroatomes choisis parmi N, O, S ou P.

10. Laine minérale selon la revendication 8, comprenant au moins un composé du phosphore qui est un oligomère ou un polymère du type polyacide ou polyester phosphorique de formule générale (3) suivante : 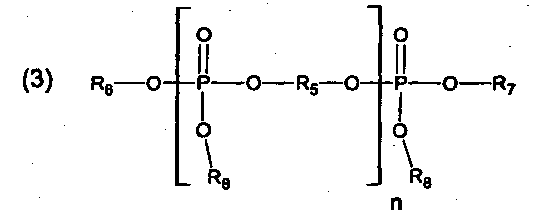 dans lequel :
- la longueur n de la chaîne est comprise entre 1 et 100, de préférence entre 1 et 50, notamment entre 2 et 10.
- les substituants R₅ à R₈ sont des entités majoritairement carbonées identiques ou différentes, de préférence du type alkyle, aryle, alcenyle, alcynyle, acyle ou hydroxyalkyle éventuellement ramifiés, pouvant éventuellement être de nature oligomérique ou polymérique et/ou contenir un ou plusieurs hétéroatomes choisis parmi N, O, S ou P.

11. Laine minérale selon l'une des revendications 4 à 10, comprenant au moins un composé du phosphore qui est obtenu par une réaction d'estérification ou de transestérification entre des acides ou esters respectivement phosphoniques et phosphoriques et des polyols (en particulier diols), des polyacides (en particulier diacides) ou des composés époxy.

12. Laine minérale selon la revendication précédente, comprenant au moins un composé du phosphore qui est obtenu par réaction entre de la mélasse et des acides ou esters phosphoriques ou phosphoniques.

13. Laine minérale selon l'une des revendications précédentes, dans laquelle la teneur en composé du phosphore, exprimée en masse d'atomes de phosphore, varie de 0,0005 %, notamment plus de 0,01 % à 1%, notamment moins de 0,5 % de la masse totale des fibres

14. Procédé d'obtention des laines minérales selon l'une des revendications précédentes comprenant une étape de formage des fibres puis une étape d'apport, notamment par pulvérisation ou imprégnation d'une solution, d'au moins un composé du phosphore sur la surface desdites fibres.

15. Produit d'isolation thermique et/ou acoustique comprenant au moins une laine minérale selon l'une des revendications 1 à 13.

16. Elément de construction du type « sandwich » comprenant de la laine minérale selon l'une des revendications 1 à 13 en tant qu'âme isolante entre deux parements métalliques.

17. Utilisation d'au moins une molécule dans laquelle le ou les atome(s) de phosphore est (sont) lié(s) à au moins un atome de carbone, directement ou par le biais d'un atome d'oxygène pour améliorer les propriétés mécaniques après vieillissement en milieu humide des laines minérales comprenant des fibres dont la composition chimique comprend les constituants suivants dans les limites définies ci-après exprimées en pourcentages pondéraux:
| | |
|---|---|
| SiO₂ | 35 à 75 |
| Al₂O₃ | 0 à 12 |
| CaO | 0 à 30 |
| MgO | 0 à 20 |
| Na₂O | 0 à 20 |
| K₂O | 0 à 10 |
| B₂O₃ | 0 à 10 |
| Fe₂O₃ | 0 à 5 |
| P₂O₅ | 0 à 3. |

## Claims

1. A mineral wool capable of being dissolved in a physiological medium comprising fibers whose chemical composition comprises the following constituents in the ranges defined below, expressed as percentages by weight:
| | |
|---|---|
| SiO₂ | 35 to 75 |
| Al₂O₃ | 0 to 12 |
| CaO | 0 to 30 |
| MgO | 0 to 20 |
| Na₂O | 0 to 20 |
| K₂O | 0 to 10 |
| B₂O₃ | 0 to 10 |
| Fe₂O₃ | 0 to 5 |
| P₂O₅ | 0 to 3, |
said mineral wool comprising moreover at least one phosphorus compound, **characterized in that** one phosphorus compound is a molecule in which the phosphorus atom(s) is/are linked, directly or via an oxygen atom, to at least one carbon atom.

2. The mineral wool as claimed in claim 1, comprising at least one phosphorus compound chosen from:
a) a molecule containing a single phosphorus atom linked to at least one carbon atom, strictly by means of an oxygen atom;
b) a molecule containing a single phosphorus atom linked directly to at least one carbon atom.

3. The mineral wool as claimed in the previous claim, comprising at least one phosphorus compound (a) chosen from: a mono-, di- or tri-phosphoric ester, or an unsubstituted phosphonic or phosphinic ester, the carbon-based groups of these esters being alkyl, aryl, alkenyl, alkynyl, acyl or hydroxyalkyl compounds, which may possibly be of oligomeric or polymeric nature and/or contain one or more heteroatoms chosen from N, O or S.

4. The mineral wool as claimed in claim 2, comprising at least one phosphorus compound (b) chosen from an at least partially substituted phosphonic or phosphinic ester or acid, the various carbon-based groups of these compounds being alkyl, aryl, alkenyl, alkynyl, acyl or hydroxyalkyl compounds, which may possibly be of oligomeric or polymeric nature and/or contain one or more heteroatoms chosen from N, O or S.

5. The mineral wool as claimed in claim 1, comprising at least one phosphorus compound that is a molecule made up of several compounds of type (a) or (b) as claimed in claims 2 to 4, that are identical or different, linked together by covalent bonds.

6. The mineral wool as claimed in the previous claim, comprising at least one phosphorus compound that is an oligomer or polymer molecule, of which the number of constituent units is preferentially between 2 and 100, especially 2 and 50, or even between 2 and 10.

7. The mineral wool as claimed in claim 5 or 6, comprising at least one phosphorus compound that contains predominantly phosphorus atoms linked together via a carbon-based entity.

8. The mineral wool as claimed in the previous claim, comprising at least one phosphorus compound that may be represented according to the general formula (1) below: 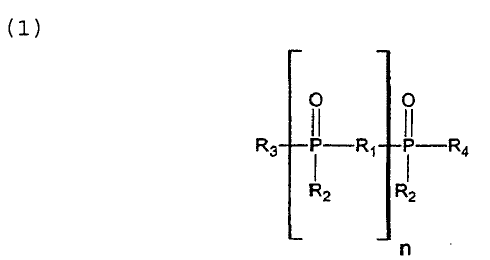 in which:
- n is between 1 and 100, preferably between 1 and 50, especially between 2 and 10;
the substituents R₁ to R₄ are identical or different, predominantly carbon-based entities, preferably of possibly branched alkyl, aryl, alkenyl, alkynyl, acyl or hydroxyalkyl type, which may possibly be of oligomeric or polymeric nature and/or contain one or more heteroatoms chosen from N, O, S or P.

9. The mineral wool as claimed in the previous claim, comprising at least one phosphorus compound that is a phosphonic polyester-type oligomer or polymer of general formula (2) below: 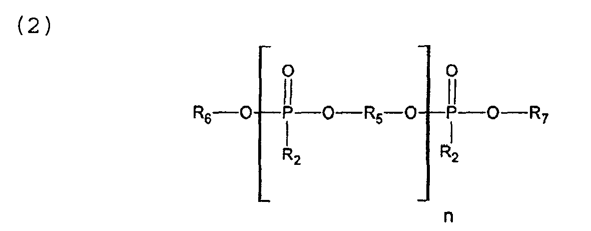 in which:
- the chain length n is between 1 and 100, preferably between 1 and 50, especially between 2 and 10;
- the substituents R₂ and R₅ to R₇ are identical or different, predominantly carbon-based entities, preferably of possibly branched alkyl, aryl, alkenyl, alkynyl, acyl or hydroxyalkyl type, which may possibly be of oligomeric or polymeric nature and/or contain one or more heteroatoms chosen from N, O, S or P.

10. The mineral wool as claimed in claim 8, comprising at least one phosphorus compound that is a phosphoric polyacid or polyester-type oligomer or polymer of general formula (3) below: 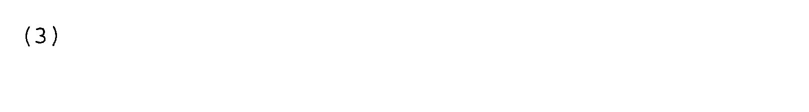 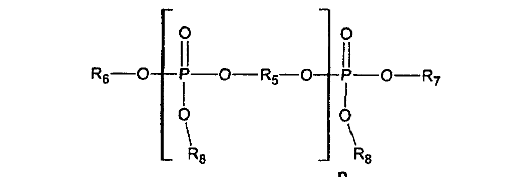 in which:
- the chain length n is between 1 and 100, preferably between 1 and 50, especially between 2 and 10;
- the substituents R₅ to R₈ are identical or different, predominantly carbon-based entities, preferably of possibly branched alkyl, aryl, alkenyl, alkynyl, acyl or hydroxyalkyl type, which may possibly be of oligomeric or polymeric nature and/or contain one or more heteroatoms chosen from N, O, S or P.

11. The mineral wool as claimed in one of claims 4 to 10, comprising at least one phosphorus compound that is obtained by an esterification or transesterification reaction between acids or esters, that are phosphonic and phosphoric respectively, and polyols (in particular diols), polyacids (in particular diacid) or epoxy compounds.

12. The mineral wool as claimed in the previous claim, comprising at least one phosphorus compound that is obtained by reaction between molasses and the phosphoric or phosphonic acids or esters.

13. The mineral wool as claimed in one of the previous claims, in which the amount of phosphorus compound, expressed by mass of phosphorus atoms, varies from 0.0005%, especially more than 0.01%, to 1%, especially less than 0.5% of the total mass of fibers.

14. A method of obtaining the mineral wools as claimed in one of the previous claims, comprising a fiber-forming step, then a step of introducing, by spraying or impregnation of a solution, at least one phosphorus compound onto the surface of said fibers.

15. A thermal and/or acoustic insulation product comprising at least one mineral wool as claimed in one of claims 1 to 13.

16. A "sandwich" type construction component comprising mineral wool as claimed in one of claims 1 to 13 as an insulating core between two metal facings.

17. The use of at least one molecule in which the phosphorus atom(s) is/are linked to at least one carbon atom, directly or by means of an oxygen atom, in order to improve the mechanical properties after aging in a humid environment of the mineral wools comprising fibers whose chemical composition comprises the following constituents in the ranges defined below, expressed as percentages by weight:
| | |
|---|---|
| SiO₂ | 35 to 75 |
| Al₂O₃ | 0 to 12 |
| CaO | 0 to 30 |
| MgO | 0 to 20 |
| Na₂O | 0 to 20 |
| K₂O | 0 to 10 |
| B₂O₃ | 0 to 10 |
| Fe₂O₃ | 0 to 5 |
| P₂O₅ | 0 to 3. |

## Patentansprüche

1. Mineralwolle, die in der Lage ist, sich in einem physiologischen Milieu zu zersetzen, umfassend Fasern, deren chemische Zusammensetzung die folgenden Bestandteile in den unten angegebenen Grenzen umfasst, ausgedrückt in Gewichtsprozent:
| | |
|---|---|
| SiO₂ | 35 bis 75 |
| Al₂O₃ | 0 bis 12 |
| CaO | 0 bis 30 |
| MgO | 0 bis 20 |
| Na₂O | 0 bis 20 |
| K₂O | 0 bis 10 |
| B₂O₃ | 0 bis 10 |
| Fe₂O₃ | 0 bis 5 |
| P₂O₅ | 0 bis 3 |
wobei die Mineralwolle außerdem wenigstens eine Phosphorverbindung umfasst, **dadurch gekennzeichnet, dass** eine Phosphorverbindung ein Molekül ist, in dem das oder die Phosphoratom(e) direkt oder über ein Sauerstoffatom an wenigstens ein Kohlenstoffatom gebunden ist (sind).

2. Mineralwolle nach Anspruch 1, umfassend wenigstens eine Phosphorverbindung, die ausgewählt ist aus:
a) einem Molekül, enthaltend ein einziges Phosphoratom, das ausschließlich über ein Sauerstoffatom an wenigstens ein Kohlenstoffatom gebunden ist.
b) einem Molekül, enthaltend ein einziges Phosphoratom, das direkt an wenigstens ein Kohlenstoffatom gebunden ist.

3. Mineralwolle nach dem vorhergehenden Anspruch, umfassend wenigstens eine Phosphorverbindung (a) ausgewählt aus: einem Phosphormonoester, -diester oder -triester, oder einem unsubstituierten Phosphon- oder Phosphinester, wobei die Kohlenstoffgruppen dieser Ester Alkyl- Aryl-, Alkenyl-, Alkinyl-, Acyl- oder Hydroxyalkylverbindungen sind, die gegebenenfalls oligomerer oder polymerer Art sein können und/oder ein oder mehrere Heteroatome, ausgewählt aus N, O oder S, enthalten können.

4. Mineralwolle nach Anspruch 2, umfassend wenigstens eine Phosphorverbindung (b) ausgewählt aus einem Phosphon- oder Phosphinester oder einer Phosphon- oder Phosphinsäure, die wenigstens teilweise substituiert sind, wobei die verschiedenen Kohlenstoffgruppen dieser Verbindungen Alkyl-, Aryl- Alkenyl-, Alkinyl-, Acyl- oder Hydroxyalkylverbindungen sind, die gegebenenfalls oligomerer oder polymerer Art sein können und/oder ein oder mehrere Heteroatome, ausgewählt aus N, O oder S, enthalten können.

5. Mineralwolle nach Anspruch 1, umfassend wenigstens eine Phosphorverbindung, die ein Molekül ist, das aus mehreren Verbindungen vom Typ (a) oder (b) gemäß den Ansprüchen 2 bis 4 gebildet ist, die gleich oder verschieden sind, und die kovalent miteinander verbunden sind.

6. Mineralwolle nach dem vorhergehenden Anspruch, umfassend wenigstens eine Phosphorverbindung, die ein oligomeres oder polymeres Molekül ist, wobei die Anzahl der Bausteine bevorzugt zwischen 2 und 100, insbesondere zwischen 2 und 50 und insbesondere bevorzugt zwischen 2 und 10 liegt.

7. Mineralwolle nach den Ansprüchen 5 oder 6, umfassend wenigstens eine Phosphorverbindung, die eine Mehrzahl von Phosphoratomen enthält, die mittels einer Kohlenstoffeinheit miteinander verbunden sind.

8. Mineralwolle nach dem vorhergehenden Anspruch, umfassend wenigstens eine Phosphorverbindung, die gemäß der folgenden allgemeinen Formel (1) dargestellt werden kann: 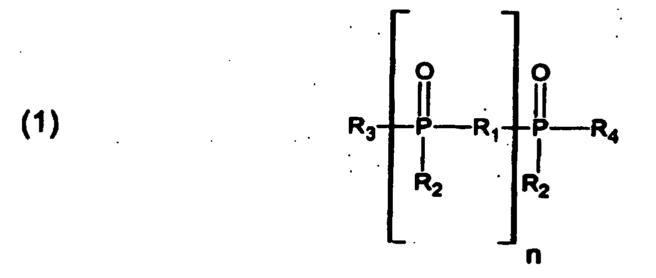 wobei
- n zwischen 1 und 100, bevorzugt zwischen 1 und 50 und insbesondere zwischen 2 und 10 liegt,
- die Substituenten R₁ bis R₄ überwiegend kohlenstoffhaltige Reste sind, die gleich oder verschieden sein können, bevorzugt vom Alkyl-, Aryl- Alkenyl-, Alkinyl-, Acyl- oder Hydroxyalkyltyp, die gegebenenfalls verzweigt sein können, wobei sie gegebenenfalls von oligomerer oder polymerer Art sein können und/oder ein oder mehrere Heteroatome, ausgewählt aus N, O, S oder P enthalten können.

9. Mineralwolle nach dem vorhergehenden Anspruch, umfassend wenigstens eine Phosphorverbindung, die ein Oligomer oder ein Polymer vom Phosphonpolyestertyp mit der folgenden, allgemeinen Formel (2) ist: 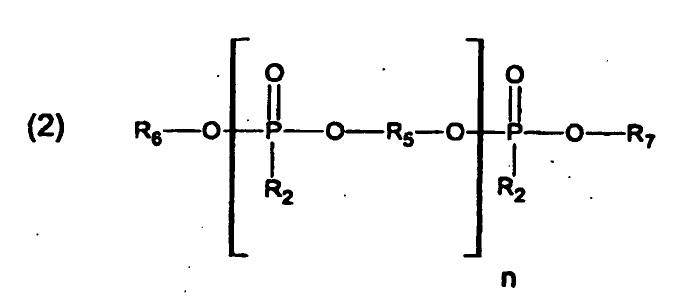 wobei:
- die Länge n der Kette zwischen 1 und 100, bevorzugt zwischen 1 und 50 und insbesondere zwischen 2 und 10 liegt.
- die Substituenten R₂ und R₅ bis R₇ überwiegend kohlenstoffhaltige Reste sind, die gleich oder verschieden sein können, bevorzugt vom Alkyl-, Aryl-Alkenyl-, Alkinyl-, Acyl- oder Hydroxyalkyltyp, die gegebenenfalls verzweigt sein können, wobei sie gegebenenfalls von oligomerer oder polymerer Art sein können und/oder ein oder mehrere Heteroatome, ausgewählt aus N, O, S oder P enthalten können.

10. Mineralwolle nach Anspruch 8, umfassend wenigstens eine Phosphorverbindung, die ein Oligomer oder Polymer vom Phosphorpolysäuren- oder Phosphorpolyestertyp mit der folgenden allgemeinen Formel (3) ist: 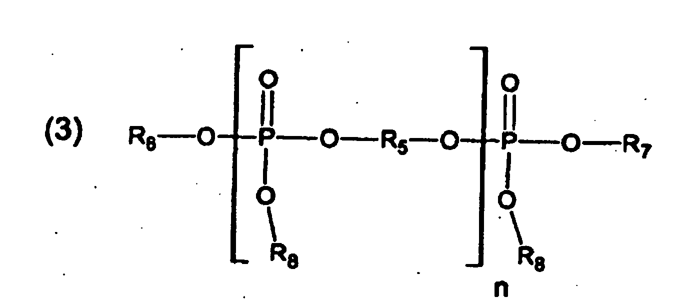 wobei:
- die Länge n der Kette zwischen 1 und 100, bevorzugt zwischen 1 und 50 und insbesondere zwischen 2 und 10 liegt.
- die Substituenten R₅ bis R₈ überwiegend kohlenstoffhaltige Reste sind, die gleich oder verschieden sein können, bevorzugt vom Alkyl-, Aryl- Alkenyl-, Alkinyl-, Acyl- oder Hydroxyalkyltyp, die gegebenenfalls verzweigt sein können, wobei sie gegebenenfalls von oligomerer oder polymerer Art sein können und/oder ein oder mehrere Heteroatome, ausgewählt aus N, O, S oder P enthalten können.

11. Mineralwolle nach einem der Ansprüche 4 bis 10, umfassend wenigstens eine Phosphorverbindung, welche mittels einer Veresterungs- oder Transveresterungsreaktion zwischen Phosphon- oder Phosphinsäuren bzw. Phosphon- oder Phosphinestern und Polyolen (insbesondere Diolen), Polysäuren (insbesondere Disäuren) oder Epoxyverbindungen erhalten wird.

12. Mineralwolle nach dem vorhergehenden Anspruch, umfassend wenigstens eine Phosphorverbindung, die mittels einer Reaktion zwischen Melasse und den Phosphon- oder Phosphinsäuren bzw. Phosphon- oder Phosphinestern erhalten wird.

13. Mineralwolle nach einem der vorhergehenden Ansprüche, in der der Phosphorverbindungsgehalt, ausgedrückt in der Atommasse von Phosphor, von 0,0005%, insbesondere von mehr als 0,01% bis 1 % variiert, insbesondere bis weniger als 0,5% der Gesamtmasse der Fasern variiert.

14. Verfahren zur Herstellung von Mineralwolle nach einem der vorhergehenden Ansprüche, umfassend eine Faserbildungsphase, gefolgt von einer Aufbringungsphase, insbesondere durch Aufsprühen einer Lösung aus wenigstens einer Phosphorverbindung auf die Faseroberfläche oder Imprägnierung der Faseroberfläche mit einer Lösung aus wenigstens einer Phosphorverbindung.

15. Wärmedämm- und/oder Schalldämmprodukt, umfassend wenigstens eine Mineralwolle nach einem der Ansprüche 1 bis 13.

16. Sandwichartiges Konstruktionselement, umfassend Mineralwolle nach einem der Ansprüche 1 bis 13 als Dämmkern zwischen zwei Metallkaschierungen.

17. Verwendung von wenigstens einem Molekül, in dem das oder die Phosphoratom(e) direkt oder über ein Sauerstoffatom an wenigstens ein Kohlenstoffatom gebunden ist (sind), um nach Alterung in einem feuchten Milieu, die mechanischen Eigenschaften von Mineralwolle zu verbessern, die Fasern umfasst, deren chemische Zusammensetzung die folgenden Bestandteile in den unten angegebenen Grenzen umfasst, ausgedrückt in Gewichtsprozent:
| | |
|---|---|
| SiO₂ | 35 bis 75 |
| Al₂O₃ | 0 bis 12 |
| CaO | 0 bis 30 |
| MgO | 0 bis 20 |
| Na₂O | 0 bis 20 |
| K₂O | 0 bis 10 |
| B₂O₃ | 0 bis 10 |
| Fe₂O₃ | 0 bis 5 |
| P₂O₅ | 0 bis 3 |
